# FASCICULE DE BREVET EUROPEEN

(11) **EP 0 426 516 B1**
(45) Date de publication et mention de la délivrance du brevet: **07.12.1994**
(21) Numéro de dépôt: 90402781.0
(22) Date de dépôt: 05.10.1990
(51) Int. Cl.: A47J 37/12

(54) **Dispositif de cuisson de produits alimentaires par bain dans un liquide chaud**
Vorrichtung zum Kochen von Nahrungsmitteln durch Eintauchen in eine heisse Flüssigkeit
Device for cooking food products by immersion in a hot liquid

(30) Priorité: 09.10.1989 FR 8913168
(43) Date de publication de la demande: 08.05.1991
(73) Titulaire: Maleyran, Jean Jacques, F-33290 Blanquefort (FR); Maleyran, Jean Claude, F-33290 Blanquefort (FR)
(72) Inventeur: Maleyran, Jean Jacques, F-33290 Blanquefort (FR); Maleyran, Jean Claude, F-33290 Blanquefort (FR)
(74) Mandataire: Le Brusque, Maurice

(56) Documents cités:
- EP-A- 0 267 323
- FR-A- 2 556 950
- FR-A- 2 588 740
- US-A- 2 053 568
- US-A- 3 483 982
- US-A- 3 839 951
- US-A- 3 977 390
- US-A- 4 768 426
- US-A- 4 772 183

## Description

La présente invention concerne un dispositif de cuisson de produits alimentaires par bain dans un liquide chaud.

Elle se rapporte plus précisément à un dispositif transmettant la chaleur d'un liquide de cuisson aux produits alimentaires et comprenant:
1) une enceinte de cuisson délimitée dans une cuve, destinée à contenir du liquide, et
2) un corps de chauffe, provoquant la montée en température du liquide.

Il est connu de frire des aliments dans un bain d'huile.

Le document FR-A-2.588.740 par exemplee décrit une friteuse à circulation d'huile, du genre comprenant une pompe qui aspire l'huile d'un bain contenu dans un bac de grande dimension pour la refouler dans une cuve de cuisson communiquant avec ledit bac à travers une paroi filtrante.

Pendant la cuisson, l'huile s'écoule hors de cette cuve à travers un filtre qui retient les particules et autres déchets de cuisson, et retombe dans le bain d'huile contenu dans le bac. L'aspiration de l'huile par la pompe s'effectue à travers une canalisation verticale plongée dans le bain d'huile. Cette canalisation verticale n'est pas reliée à la cuve de cuisson.

Par ailleurs, le bac de la friteuse est équipé d'une résistance électrique pour le chauffage du bain d'huile.

Dans les modes connus de cuissons pour friture, au fur et à mesure de leur utilisation, les huiles de friture changent d'aspect (brunissement), fûment et moussent de plus en plus abondamment. Elles peuvent également communiquer un goût désagréable aux aliments. En outre le chauffage intense et répété des matières grasses s'accompagne de modifications chimiques pouvant aboutir à la formation de composés toxiques.

Il apparaît, après des études de toxicité des huiles usées, que les huiles de friture ne sont normalement pas dangereuses pour le consommateur, mais que de mauvaises conditions d'utilisation peuvent être à l'origine de la formation de composés toxiques.

Les différentes matières grasses utilisables pour la friture possédent des teneurs en acides gras insaturés très différentes.

De nombreux travaux, en particulier ceux de CASTANG. J. "Etude sur les huiles de friture, Caractères analytiques et projet de réglementation" dans "Ann. Fals. Exp. Chim. 1981 - 74.803. 701-718" montrent que le degré d'altération d'une matière grasse n'est que peu influencé par sa composition chimique.

La teneur en acide linolénique ne peut plus être considérée aujourd'hui comme un facteur absolu déterminant l'aptitude d'une graisse à être utilisée en friture. Les principales huiles proposées par le commerce semblent donc toutes pouvoir convenir pour de bonnes pratiques culinaires.

Ce sont en fait de bonnes conditions d'utilisation des matières grasses pendant les opérations de friture qui permettent d'obtenir des denrées alimentaires dépourvues de tout caractère toxique.

Il faut en particulier surveiller la température du bain d'huile. En effet, plus celle-ci est élevée, plus l'oxydation des acides gras est rapide et importante.

Il est recommandé de ne pas chauffer les huiles de friture à une température supérieure à 180°C.

Par ailleurs, les appareils doivent être conçus de manière telle que la température des surfaces de chauffe ne soit pas trop élevée, ce qui accélérerait l'altération des graisses.

Les opérations de friture n'ont normalement aucune incidence nutritionnelle néfaste sur les aliments. Cependant dans une huile altérée par de multiples chauffages à haute température, il apparaît de nombreux composés de dégradation dont certains possèdent des propriétés toxiques.

C'est pourquoi la température de chauffage doit être inférieure à 180°C et de plus les graisses du bain doivent être renouvelées après vingt cycles de friture au plus.

Les huiles de friture utilisées dans de telles conditions conservent une qualité satisfaisante.

Dans les fritures connues, le chauffage de l'huile peut se faire suivant quatre manières:
1) Par chauffe directe de la cuve contenant l'huile sans contrôle de température de ladite cuve, mais seulement de l'huile qui y est contenue, au risque d'avoir une surchauffe au contact du métal pouvant atteindre 300°C et plus.
2) Par chauffage de tubes immergés dans l'huile à l'aide de brûleur torche, ce qui provoque les mêmes inconvénients que précédemment.
   Dans ces deux modes de cuisson, le manque de finesse du contrôle de température de surchauffe provoque les altérations de l'huile mentionnées plus haut.
3) Par des résistances immergées dans le bain de la friteuse.
   Cette manière de réaliser la cuisson présente le même principe de régulation que précédemment, avec le risque ce surchauffe de l'huile au contact des résistances pouvant atteindre plus de 400°C pour une utilisation de l'huile à 180°C.
   Ceci entraîne les mêmes inconvénients que dans les modes de cuisson mentionnés plus haut.
4) Par un générateur électrique avec pompe de cirulation disposée dans l'enceinte de cuisson.
   Cette manière de frire présente les mêmes inconvénients que précédemment dus au risque de surchauffe au contact de l'huile avec le générateur.

Aucune de ces manières de frire connues ne permet de réguler la température avec un point de consigne maximum de 180°C au niveau de l'élément chauffant et une utilisation à plus ou moins 1°C de cette température de consigne, avec compensation du rendement par circulation forcée de l'huile.

L'invention vise à remédier à ces inconvénients et à apporter divers avantages consistant essentiellement à permettre la cuisson de "nems" et de tout autre produit nécessitant une cuisson dans un liquide à 180°C, sans que le liquide ne dépasse en aucun point de l'enceinte de cuisson ou du corps de chauffe, la température maximum de 180°C.

Elle a donc pour objet un dispositif de cuisson de produits alimentaires par bain dans un liquide chaud, transmettant la chaleur de cuisson auxdits produits alimentaires et circulant dans un circuit comprenant:
1) une enceinte de cuisson délimitée dans une cuve, destinée à contenir du liquide, tel que de l'huile, et
2) un corps de chauffe, provoquant la montée en température du liquide.

Ce dispositif est caractérisé en ce que l'homogénéité en température du liquide dans ladite enceinte de cuisson est assurée par l'arrivée du liquide à l'intérieur de la cuve, par l'intermédiaire d'une pompe de circulation forcée, l'arrivée du liquide se faisant par le fond de la cuve à l'aide d'un diffuseur. Les parois de l'enceinte de cuisson ne sont pas chauffées pour éviter l'inertie de la montée en température.

Afin qu'une vidange partielle de la partie basse de la cuve compensée par l'addition de liquide neuf soit effectuée périodiquement dans le but d'éliminer les particules calcinées contenues dans le liquide et de favoriser la répartition du liquide chaud à l'arrivée dans le fond de la cuve, ladite cuve contient un panier apte à canaliser le liquide en ébullition, avec un débordement du liquide redescendant refroidi, de chaque coté du panier, et déposant les déchêts au fond d'une zone froide.

Un mouvement de liquide à l'intérieur de la cuve, assurant un échange thermique très rapide au niveau du liquide de cuisson et des aliments, augmente le rendement et donc la production. Ceci évite en outre que le liquide de cuisson soit surchauffé.

En vue d'obtenir un tel échange thermique, le dispositif comprend des canalisations de circulation du liquide vers le corps de chauffe, lesdites canalisations débouchant dans la cuve sensiblement à mi-hauteur de la zone froide.

Dans le but d'augmenter l'homogénéité en température, le liquide de chauffage circule en circuit fermé.

Le filtrage permanent pendant le cycle de cuisson permet d'éviter la carbonisation des particules en suspension, ce qui prolonge considérablement la durée du bain de liquide. Pour obtenir ce résultat, le liquide provenant de la zone froide est ramené à un collecteur raccordé à un filtre raccordé au corps de chauffe.

Afin de filtrer différentes sortes de particules sans provoquer d'oxydation du liquide ou du filtre, ledit filtre comprend au moins deux étages équipés de tamis fabriqués en un métal inoxydable et comprenant des mailles de différentes dimensions.

En vue d'améliorer la qualité du filtrage, le dernier étage dudit filtre comprend un tamis à micro-mailles.

Dans le but de frire des produits nécessitant une cuisson dans de l'huile à 180°C maximum, le liquide de cuisson est de l'huile, et, à la sortie du filtre, l'huile est reprise par la pompe et de nouveau entraînée vers le générateur où elle reprend des calories avant de revenir dans la cuve.

Afin que la pompe supporte des températures allant jusqu'à 300°C et plus, la pompe comprend des moyens d'étanchéité comportant au moins une garniture métallique en stellite inoxydable avec grains en carbone et chargée d'antimoine, et au moins une bague en matériau connu sous la dénomination commerciale de "Kalrez"®.

Pour garantir une utilisation intensive du dispositif sans altération de ses composants et sans échauffement du moteur, la pompe est entraînée par un moteur tenu à distance et relié à ladite pompe par une jonction à rupture de pont thermique.

Dans le but de surveiller la température du bain, car l'oxydation des acides gras est d'autant plus rapide et importante que celle-ci est élevée, le corps de chauffe est un générateur à combustion équipé d'au moins deux brûleurs en fonte, chaque brûleur étant alimenté par au moins une vanne de gaz télécommandée, à au moins deux allures de fonctionnement.

En vue d'obtenir une régulation à quatre étages et de limiter à 180°C la température du liquide de cuisson, le dispositif comprend au moins une sonde de température placée à l'intérieur du générateur et contrôlant deux premiers étages de régulation, et il comprend au moins une autre sonde de température placée à i'intérieur de la cuve, et assurant la régulation de la température du bain, en agissant sur deux autres étages de la régulation.

La température du liquide ne dépassent pas 200°C, l'évaporation est sensiblement diminuée.

Afin de permettre d'arrêter l'appareil lorsque le filtre est encrassé, le dispositif comprend au moins un pressostat à différentiel contrôlent la différence de débit et de pression entre l'entrée et la sortie du filtre.

Pour alerter l'utilisateur en cas de manque de liquide, le dispositif comprend une sonde électrique de contrôle du niveau de liquide.

La cuve présente des pentes à proximité de l'arrivée du liquide pour créer une importante zone froide.

En vue d'éviter l'altération des graisses, l'appareil est conçu de manière telle que la température des surfaces de chauffe ne soit pas trop élevée. Pour atteindre ce but, le diffuseur, placé dans le fond de la cuve en forme de tronc de pyramide ou de cône renversé, a lui-même la forme générale d'un tronc de cône ou de pyramide divergeant vers le haut et dans la petite base duquel débouche une canalisation d'arrivée de liquide chaud provenant de la pompe.

L'accès au filtre pour le nettoyage est assuré par au moins une plaque de fermeture en métal inoxydable maintenue sur un carter de filtre par des écrous papillons facilement accessibles.

Lorsque le liquide est de l'huile, pour éviter l'oxydation, le corps et la roue de la pompe de circulation sont réalisés entièrement en matériaux inoxydables.

En vue de faciliter le démontage et le remontage du dispositif, les éléments contenus dans et/ou constituant l'enceinte de cuisson sont positionnés et fixés par simple emboîtement.

La cuve est construite avec des angles arrondis pour faciliter le nettoyage.

Divers détails et avantages de l'invention apparaîtront clairement à le lecture de la description qui va suivre, donnée à titre non limitatif, en se référant aux dessins annexés, dans lesquels:
La Figure 1 est une vue en perspective d'un dispositif de cuisson selon l'invention.
La Figure 2 représente en coupe verticale vue de droite, au niveau de l'enceinte de cuisson, le dispositif selon l'invention tel que représenté à la Figure 1.
La Figure 3 représente vue en coupe un filtre à huile à trois étages utilisé dans le dispositif selon l'invention illustré à la Figure 1.
La Figure 4 représente un schéma d'un générateur à gaz du dispositif selon l'invention illustré à la Figure 1.

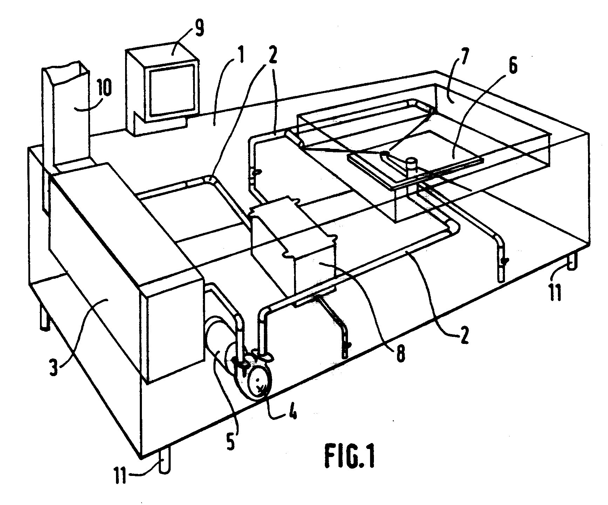

Le dispositif de cuisson 1, pour tous produits nécessitant une cuisson dans l'huile à 180°C, sens que l'huile ne dépasse en aucun point de l'enceinte de cuisson ou du générateur la température maximum de 180°C et tel qu'illustré à la Figure 1, comprend un circuit d'huile circulant dans des canalisations 2 et passant à travers différents composants 3, 4, 6, 7 et 8.

Le circuit d'huile se compose, outre les canalisations 2, d'un générateur à gaz 3, d'une pompe de circulation forcée 4 entraînée par un moteur 5, d'un diffuser 6, d'une cuve 7 délimitant l'enceinte de cuisson et d'un filtre 8.

Ce circuit d'huile est fermé.

L'huile est montée en température dans le générateur à gaz 3. Les parois de la cuve 7 délimitant l'enceinte cuisson ne sont pas chauffées pour éviter l'inertie de la montée en température.

L'huile est amenée à l'intérieur de la cuve 7 par l'intermédiaire de la pompe de circulation 4 dont le corps et la roue sont entièrement constitués en matériaux inoxydables. Un organe d'étanchéité spécial, comprenant une garniture métallique en stellite inoxydable avec grains en carbone et chargée d'antimoine, et une bague en matériau connu sous le dénomination commerciale "Kalrez"®, permet à cette pompe de supporter des températures allant jusqu'à 300°C et plus. Le moteur 5, tenu à distance et relié à la pompe 4 par une jonction à rupture du pont thermique garantit une utilisation intensive du dispositif 1 sans altération de ses composants et sans échauffement du moteur 5.

L'arrivée de l'huile dans la cuve 7 se fait par le fond, à l'aide du diffuseur 6.

L'huile reprise de la cuve 7 est ramenée par les canalisations 2 à un filtre 8.

Le filtrage permanent pendant le cycle de cuisson permet d'éviter la carbonisation des particules en suspension, ce qui prolonge considérablement la durée du bain d'huile.

A la sortie du filtre 8, l'huile est aspirée par la pompe 4 et de nouveau ramenée au générateur 3 où elle reprend des calories avant de revenir dans la cuve 7. La circulation de l'huile permet un échange thermique très rapide et éviter qu'elle ne soit surchauffée.

De plus, le mouvement de l'huile à l'intérieur de la cuve 7 assure un échange très rapide au niveau des aliments, ce qui augmente le rendement et donc la production.

La température de l'huile ne dépassent jamais 200°C, l'évaporation est sensiblement diminuée.

Le niveau de l'huile est contrôle par une sonde électrique et alerte l'utilisateur en cas de manque d'huile.

Le fonctionnement du dispositif 1 est commandé et contrôlé par l'intermédiaire du tableau de commande et de régulation 9.

Le générateur 3 est un corps de chauffe alimenté en gaz par la canalisation 10.

Le dispositif 1 forme un meuble monté sur des pieds 11 de manière à être isolé du sol et à ce que sa face supérieure soit à la hauteur souhaîtable pour les manipulations lors de la cuisson.

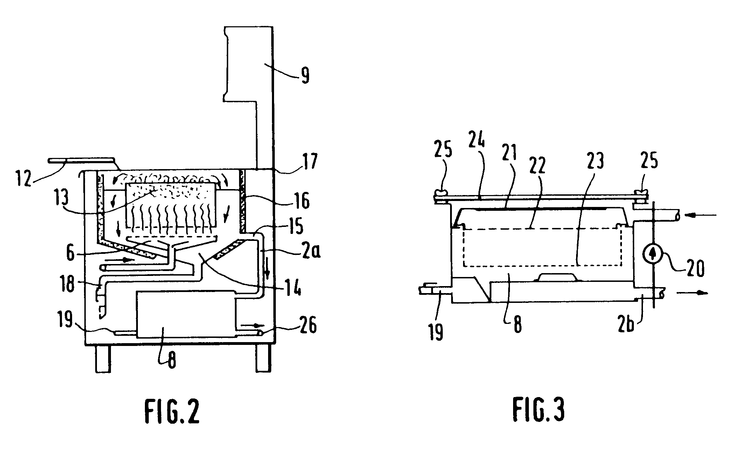

La Figure 2 représente en coupe verticale vue de droite au niveau de l'enceinte de cuisson, le dispositif 1 selon l'invention, représenté à la Figure 1.

L'huile arrive par le fond de la cuve délimitant l'enceinte de cuisson à l'aide d'un diffuseur 6.

La disposition dans la cuve 7 d'un panier de cuisson 12 connu en soi, contenant les aliments et facilement démontable par simple déboîtement, favorise la répartition de l'huile chaude à l'arrivée sous le panier 12 et provoque une ébullition 13 canalisée, avec débordement de l'huile qui redescend refroidie de chaque côté du panier 12 pour déposer les déchêts au fond d'une zone froide 14. La sortie de l'huile 15 se fait dans deux angles de la cuve 7, à mi-hauteur de la zone froide 14. L'huile est alors ramenée à une canalisation 2a raccordée au filtre 8.

Les parois 16 de la cuve forment une isolation thermique car elles sont en acier inoxydable extérieurement doublées d'un matériau isolant thermiquement.

La cuve est construite avec des angles arrondis 17 pour faciliter le nettoyage et, en pente vers l'arrivée pour créer une importante zone froide 14, ce qui permet une vidange partielle de la partie basse compensée par l'addition d'huile neuve, afin d'éliminer les particules calcinées contenues dans l'huile.

Une canalisation 18 débouchant dans la partie inférieure de la zone froide 14 permet de vidanger l'enceinte de cuisson.

Une sonde placée à l'intérieur de la cuve assure la régulation de la température du bain, en agissant sur la régulation.

Cette coupe représente en élévation, parce qu'il est situé à l'arrière de l'enceinte de cuisson, le tableau de commande et de régulation 9, qui permet de contrôler et de commander le circuit selon l'invention. Le filtre à huile 8 est également représenté en élévation, car situé à l'arrière du plan de coupe, ainsi que la canalisation de vidange 19 du filtre 8 et la canalisation de retour 2b vers le générateur 3. Ce filtre 8 sera décrit plus en détails en référence à la Figure 3.

La Figure 3 représente le filtre 8 vu en coupe longitudinale.

L'huile est amenée au filtre 8 à trois étages équipés de tamis 21, 22, 23 de différentes dimensions. Les tamis à mailles sont fabriqués dans un matériau métallique inoxydable.

Le dernier étage du filtre 8 est équipé d'un tamis 23 à micro-mailles.

L'accès au filtre 8 pour le nettoyage est assuré par une plaque 24 de fermeture supérieure, en métal inoxydable, maintenue sur un carter de filtre par six écrous papillons 25, facilement accessibles.

Un pressostat différentiel 20, placé entre l'entrée et la sortie du filtre 8 permet de stopper l'appareil lorsque le filtre 8 est encrassé, car il détecte alors une différence de pression entre l'entrée et la sortie qui est supérieure à un seuil donné.

Une canalisation 19 située en vis-à-vis de la sortie 2b permet de vidanger le filtre 8.

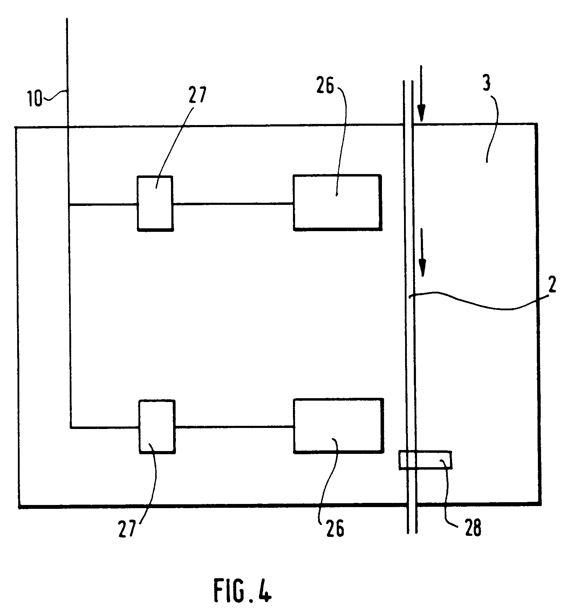

Le schéma de la Figure 4 représente le générateur 3 du dispositif 1 décrit en référence à la Figure 1.

Le générateur 3 assure la régulation par un équipement de conception particulière. Il est équipé de deux brûleurs 26 en fonte de 17 KW chacun.

Chaque brûleur 26 est alimenté par une vanne 27 de gaz télécommandée, à deux allures de fonctionnement; en outre chaque vanne 27 est alimentée en gaz par la canalisation 10.

Ce montage permet d'obtenir une régulation à quatre étages. Une sonde de température 28, placée à l'intérieur du générateur, contrôle les deux premiers étages de la régulation et permet de limiter à 200°C la température d'huile, les deux autres étages de la régulation sont contrôlés par une sonde de température non représentée logée dans la cuve.

L'huile circule dans la canalisation 2 qui traverse le générateur, les flèches représentent le sens de circulation de l'huile.

Bien que l'invention ait été décrite en liaison avec des structures bien particulières, elle ne s'en trouve nullement limitée, et on peut y apporter de nombreuses variantes, comme par exemple un ordre différent dans la distribution des composants du circuit, une variation des éléments internes des composants, la suppression de certains composants , ou l'ajout de nouveaux composants à ceux représentés dans chaque dessin; il est encore possible d'utiliser le module technique, c'est-à-dire le dispositif de cuisson sans l'enceinte de cuisson, pour des friteuses existantes, ce qui permet la régulation de la température de l'huile dans ces friteuses.

Pour ce faire, on peut reprendre l'enceinte de cuisson de grande capacité de friteuses industrielles de 40 à 100 litres environ, et placer cette enceinte de cuisson dans le dispositif à la place de l'enceinte de cuisson spécifique décrite précédemment sans sortir du cadre de l'invention.

Les signes de référence insérés après les caractéristiques techniques mentionnées dans les revendications, ont pour seul but de faciliter la compréhension de ces dernières, et n'en limitent aucunement la portée.

## Revendications

1. Dispositif de cuisson de produits alimentaires par bain dans un liquide chaud transmettant la chaleur de cuisson auxdits produits alimentaires et comprenant,
une enceinte de cuisson délimitée dans une cuve (7), destinée à contenir du liquide, et
un corps de chauffe (3) provoquant la montée en température du liquide,
l'homogénéité en température du liquide dans ladite enceinte de cuisson étant assurée par l'arrivée du liquide chaud à l'intérieur de la cuve (7) par l'intermédiaire d'une pompe de circulation forcée (4), l'arrivée du liquide chaud se faisant par le fond de la cuve à l'aide d'un diffuseur (6), caractérisé en ce que la cuve (7) contient un panier (12) de cuisson disposé au-dessus du diffuseur (6) ayant un fond comportant une pluralité d'ouvertures qui permettent au liquide chaud provenant du diffuseur (6) de traverser le panier (12) en provoquant un flux dirigé qui, par ébullition, permet par un débordement du liquide redescendant refroidi de chaque côté du panier, de déposer des déchets au fond d'une zone froide (14).

2. Dispositif selon la revendication 1, caractérisé en ce qu'il comprend des canalisations (2) de circulation du liquide vers le corps de chauffe (3), lesdites canalisations (2) débouchant dans la cuve (7) sensiblement à mi-hauteur de la zone froide (14).

3. Dispositif selon la revendication 2, caractérisé en ce que le liquide provenant de la zone froide (14) est ramené par une canalisation (2a) à un filtre (8) raccordé au corps de chauffe (3) et comprenant au moins deux étages équipés de tamis (21, 22 ou 23) fabriqués en un métal inoxydable et comprenant des mailles de différentes dimensions.

4. Dispositif selon la revendication 3, caractérisé en ce que le dernier étage dudit filtre comprend un tamis (23) à micro-mailles.

5. Dispositif selon l'une quelconque des revendications précédentes, caractérisé en ce que la pompe (4) comprend des moyens d'étanchéité comportant au moins une garniture métallique en stellite inoxydable avec grains en carbone et chargée d'antimoine et au moins une bague en matériau connu sous la dénomination commerciale de "Kalrez".

6. Dispositif selon l'une des revendications précédentes, caractérisé en ce que la pompe (4) est entraînée par un moteur (5) tenu à distance et relié à ladite pompe (4) par une jonction à rupture de pont thermique.

7. Dispositif selon l'une des revendications précédentes, caractérisé en ce que le corps de chauffe est un générateur annexe en acier (3) inoxydable multicircuit à très grande surface d'échange, fonctionnant par canalisation de gaz à l'aide de brûleurs à grandes surfaces en fonte permettant une élévation très douce de la température.

8. Dispositif selon la revendication 7, caractérisé en ce que chaque brûleur (26) est alimenté par au moins une vanne de gaz (27) télécommandée à au moins deux allures de fonctionnement permettant la modulation de la température en fin d'élévation.

9. Dispositif selon la revendication 7, caractérisé en ce qu'il comprend au moins une sonde de température (28) placée à l'intérieur du générateur (3) et contrôlant deux premières étagères de régulation.

10. Dispositif selon la revendication 9,caractérisé en ce qu'il comprend une autre sonde de température placée à l'intérieur de la cuve (7),assurant la régulation de la température du bain, en agissant sur deux autres étages de la régulation.

11. Dispositif selon la revendication 3, caractérisé en ce qu'il comprend au moins un contrôleur de débit (20) placé à la sortie du filtre (8).

12. Dispositif selon l'une des revendications précédentes , caractérisé en ce qu'il comprend une sonde électrique de contrôle au niveau de liquide dans la cuve (7).

13. Dispositif selon l'une des revendications précédentes, caractérisé en ce que le diffuseur (6), placé dans le fond de la cuve (7) en forme de tronc de pyramide ou de cône renversé, a lui-même la forme générale d'un tronc de cône ou de pyramide divergeant vers le haut et dans la petite base duquel débouche une canalisation (2) d'arrivée de liquide chaud provenant de la pompe.

## Claims

1. Device for cooking food products by immersion in a hot liquid transmitting the cooking heat to said products and comprising,
a cooking enclosure within a tank (7) designed for receiving liquid and
a heating body (3) causing the temperature rise of the liquid,
whereby the temperature homogeneity of the liquid in said cooking enclosure is provided by the hot liquid flowing into the tank (7) via a forced circulation pump (4), whereas the hot liquid enters the tank by its lower section using a peeler (6), characterised in that the tank (7) contains a cooking basket (12) arranged above the peeler (6) with a bottom containing a number of openings enabling the hot liquid from the peeler (6) to flow through the basket (12) by causing a directed flow which, by a boiling effect, enables by overflowing, to reject the waste at the bottom section of a cold area (14) while the cooled flow runs down on both sides of the basket.

2. Device according to claim 1, characterised in that it contains a liquid circulation pipework (2) towards the heating body (3), said pipework (2) ending in the tank (7) more or less half-way up in the cold area (14).

3. Device according to claim 2, characterised in that the liquid from the cold area (14) is brought back by a pipework (2a) to a filter (8) connected to the heating body (3) and comprising at least two stages fitted with sifters (21, 22 or 23) made of a stainless metal and containing meshes of various sizes.

4. Device according to claim 3, characterised in that the last stage of said filter comprises a micromesh sifter (23).

5. Device according to anyone of the previous claims, characterised in that the pump (4) contains leak-proofing means with at least a metal gasket made of stainless stellite with carbon grains and loaded with antimony and at least one ring made of a material known under the trade name "Kalrez".

6. Device according to anyone of the previous claims, characterised in that the pump (4) is connected to a remote engine (5) linked to said pump (4) by a thermal bridge cut-out junction.

7. Device according to anyone of the previous claims, characterised in that the heating body is an auxiliary generator (3) made of stainless steel with a very large exchange surface, operating by a gas pipework using large surface cast iron burners enabling very soft temperature rise.

8. Device according to claim 7, characterised in that each burner (26) is fed by at least one remote control gas valve (27) with at least two operating speeds enabling to modulate the temperature at the end of rise.

9. Device according to claim 7, characterised in that it contains at least one temperature probe (28) located inside the generator (3) and controlling two first regulation stages.

10. Device according to claim 9, characterised in that it contains another temperature probe located inside the tank (7) for the regulation of the bath temperature while influencing two other regulation stages.

11. Device according to claim 11, characterised in that it contains at least a flowrate controller (20) located at the filter outlet (8).

12. Device according to claim 7, characterised in that it contains an electric control probe for the liquid level in the tank (7).

13. Device according to anyone of the previous claims, characterised in that the peeler (6), located at the bottom of the tank (7), with the shape of a pyramid or of a reverted cone, exhibits the overall shape of a cone or pyramid trunk diverging towards the upper section and in the small base of which a pipework (2) can be found for the incoming hot liquid from the pump.

## Patentansprüche

1. Vorrichtung zum Kochen von Nahrungsmitteln durch Eintauchen in eine heiße Flüssigkeit, welche die Kochwärme auf diese Nahrungsmittel überträgt, und wobei die Vorrichtung einen in einer Wanne (7) begrenzten Kochraum, der dazu bestimmt ist, Flüssigkeit aufzunehmen, und
einen Heizkörper (3) aufweist, der das Ansteigen der Temperatur der Flüssigkeit hervorruft,
wobei die Temperaturhomogenität der Flüssigkeit in dem Kochraum durch den Eintritt der heißen Flüssigkeit in das Innere der Wanne (7) mittels einer gesteuerten Umwälzpumpe (4) sichergestellt wird, wobei der Eintritt der heißen Flüssigkeit durch den Boden der Wanne mit Hilfe eines Diffusors (6) erfolgt,
dadurch gekennzeichnet, daß die Wanne (7) einen über dem Diffusor (6) angeordneten Kochkorb (12) enthält, mit einem Boden, welcher eine Vielzahl von Öffnungen aufweist, die der von dem Diffusor (6) kommenden heißen Flüssigkeit erlauben, den Korb (12) zu durchqueren, wobei ein gelenkter Fluß hervorgerufen wird, der durch Sieden erlaubt, daß durch ein Überlaufen der Flüssigkeit, die von jeder Seite des Korbes abgekühlt wieder sinkt, Abfallprodukte auf dem Boden einer kalten Zone (14) abgelagert werden.

2. Vorrichtung nach Anspruch 1, dadurch gekennzeichnet, daß sie Rohrleitungen (2) zum Umwälzen der Flüssigkeit zu dem Heizkörper (3) hin aufweist, wobei die Rohrleitungen (2) im wesentlichen auf halber Höhe der kalten Zone (14) in die Wanne (7) münden.

3. Vorrichtung nach Anspruch 2, dadurch gekennzeichnet, daß die von der kalten Zone (14) kommende Flüssigkeit durch eine Rohrleitung (2a) zu einem Filter (8) zurückgeführt wird, welcher mit dem Heizkörper (3) verbunden ist und mindestens zwei Stufen aufweist, die mit Sieben (21, 22 oder 23) ausgestattet sind, welche aus einem nicht rostendem Metall hergestellt sind und Maschenweiten verschiedener Abmessungen aufweisen.

4. Vorrichtung nach Anspruch 3, dadurch gekennzeichnet, daß die letzte Stufe des Filters ein Sieb (23) mit Mikromaschenweiten aufweist.

5. Vorrichtung nach einem der vorangehenden Ansprüche, dadurch gekennzeichnet, daß die Pumpe (4) Dichtungsmittel aufweist, welche mindestens eine Metalldichtung aus nicht rostendem Stellit mit Kohlenstoffkörnern und mit Antimon beladen und mindestens einen Ring aus unter der handelsüblichen Bezeichnung "Kalrez" bekanntem Material aufweist.

6. Vorrichtung nach einem der vorangehenden Ansprüche, dadurch gekennzeichnet, daß die Pumpe (4) durch einen Motor (5) angetrieben wird, welcher in Abstand gehalten und mit der Pumpe (4) durch eine Verbindung mit Unterbrechung der Wärmebrücke verbunden ist.

7. Vorrichtung nach einem der vorangehenden Ansprüche, dadurch gekennzeichnet, daß der Heizkörper ein angebauter Generator (3) aus nicht rostendem Stahl mit mehreren Kreisläufen mit drei sehr großen Austauschoberflächen ist, welcher durch Gasleitung mit Hilfe von Brennern mit großen gußeisernen Oberflächen arbeitet, die ein sehr sanftes Anheben der Temperatur erlauben.

8. Vorrichtung nach Anspruch 7, dadurch gekennzeichnet, daß jeder Brenner (26) durch mindestens ein Gasventil (27) versorgt wird, welches für mindestens zwei Betriebsstärken fernsteuerbar ist, wodurch eine Modulation der Temperatur am Ende des

9. Vorrichtung nach Anspruch 7, dadurch gekennzeichnet, daß sie mindestens eine Temperatursonde (28) aufweist, welche im Inneren des Generators (3) angeordnet ist und zwei erste Regelstufen steuert.

10. Vorrichtung nach Anspruch 9, dadurch gekennzeichnet, daß sie eine andere Temperatursonde aufweist, welche im Inneren der Wanne (7) angeordnet ist und die Temperaturregelung des Bades sicherstellt, indem sie auf zwei andere Regelstufen einwirkt.

11. Vorrichtung nach Anspruch 3, dadurch gekennzeichnet, daß sie mindestens ein Steuergerät (20) für den Durchsatz aufweist, welches am Ausgang des Filters (8) angebracht ist.

12. Vorrichtung nach einem der vorangehenden Ansprüche, dadurch gekennzeichnet, daß sie eine elektrische Steuersonde für die Flüssigkeit in der Wanne (7) aufweist.

13. Vorrichtung nach einem der vorangehenden Ansprüche, dadurch gekennzeichnet, daß der Diffusor (6), welcher in dem Boden der Wanne (7) in Form eines Pyramidenstumpfes oder eines umgekehrten Kegels angebracht ist, selbst die allgemeine Form eines Kegelstumpfes oder einer Pyramide hat, welche nach oben auseinanderläuft und in deren kleine Basis eine Rohrleitung (2) für den Eintritt der aus der Pumpe kommenden heißen Flüssigkeit mündet.
